# EUROPEAN PATENT APPLICATION

(11) **EP 3 296 369 A1**
(43) Date of publication of application: **21.03.2018**
(21) Application number: 17190729.8
(22) Date of filing: 12.09.2017
(51) Int. Cl.: C09D 11/101, C09D 11/32, B29C 64/00

(54) **COLORED SUPPORT MATERIAL FOR INKJET-MEDIATED ADDITIVE MANUFACTURING**

(30) Priority: 15.09.2016 US 201615266427
(71) Applicant: Xerox Corporation, Rochester, NY 14644 (US)
(72) Inventor: CHOPRA, Naveen, Oakville, Ontario L6H 5W4 (CA); ALLEN, Geoffrey C., Waterdown, Ontario L0R 2H5 (CA); VELLA, Sarah J., Milton, Ontario L9T 8E1 (CA); JIDDAWI, Saleh A., Vancouver, British Columbia V5P 2L7 (CA); MOORLAG, Carolyn, Mississauga, Ontario L5G 4A7 (CA)
(74) Representative: Gill Jennings & Every LLP

(57) **Abstract**

A system of inkjet inks suitable for additive manufacturing by inkjet printing includes a build ink and a support ink, the build ink and support ink have a differential color scheme and at least one of the build ink or the support ink includes a colorant. A method of additive manufacturing includes providing such a system of inkjet inks and printing via a multi-jet inkjet printing system an article with the build ink and the support ink, the article including a build material portion and a support material portion. A cartridge or kit for additive manufacturing by inkjet printing includes such a system of inkjet inks.

## Description

### BACKGROUND

The present disclosure relates to additive manufacturing. In particular, the present disclosure relates to support materials employed in additive manufacturing via inkjet printing techniques.

Inkjet-printed parts are frequently built with a sacrificial support material that is either melted or washed away from the main build material that constitutes the finished printed article. Problems can arise in assessing the complete removal of the support material. This problem may be especially important to address where the final article is intended to be a precision part. The present disclosure provides a system of build and support inkjet inks that may address the problem of assessing complete support removal. Other benefits will be apparent to those skilled in the art.

### SUMMARY

In some aspects, embodiments herein relate to systems of inkjet inks suitable for additive manufacturing by inkjet printing comprising a build ink and a support ink, wherein the build ink and support ink have a differential color scheme, and wherein at least one of the build ink or the support ink comprises a colorant.

In some aspects, embodiments herein relate to methods of additive manufacturing comprising providing a system of inkjet inks suitable for additive manufacturing by inkjet printing, the system comprising a build ink and a support ink, wherein the build ink and support ink have a differential color scheme, and wherein at least one of the build ink or the support ink comprises a colorant, and printing via a multi-jet inkjet printing system an article with the build ink and the support ink, the article comprising a build material portion and a support material portion.

In some aspects, embodiments herein relate to cartridges or kits for additive manufacturing by inkjet printing comprising a system of inkjet inks suitable for additive manufacturing by inkjet printing, the system comprising a build ink and a support ink, wherein the build ink and support ink have a differential color scheme, and wherein at least one of the build ink or the support ink comprises a colorant.

### DETAILED DESCRIPTION

Embodiments herein provide systems of build and support inkjet inks that allow color-based differentiation of build material from the support material allowing enhanced visual assessment of subsequent removal of support material to provide a finished three-dimensional article. By introducing color into the support material (or conversely to the build material, or simply having differential color schemes), it becomes easier to discern build material from support material, which can increase the efficiency of post-processing steps such as support material removal and also avoid costs associated with incomplete or inaccurate removal. In embodiments, the build and support materials are suitable for inkjet printing. In embodiments, the support material, build material, or both are UV curable inkjet inks. In embodiments, the support material is a washable UV-curable material, *i.e*., it can be washed away at the end of a three-dimensional print job. In embodiments, the support material is also swellable. Water-washable materials are often PEG-based, and can also swell in water, with the degree of swelling being dependent on the degree of crosslinking. In embodiments, the colorant is selected to have miscibility in the support material, yet does not migrate or leach into the build material. Once the finished printed part is made, the colored support material can be clearly discerned from the build material. After washing, the completeness of the removal of the support material can be assessed visually with the naked eye or by means of machine via colorimetric assessment. This differential color scheme provides a means to detect complete removal of all support material from the final part.

Advantageously, embodiments herein provide formulations that are migration-free, *i.e*., there is substantially no color leaching into build material. The systems herein also provide a quick qualitative assessment of lingering support material and when ink-built part no longer contains support material. Alternatively, assessment of lingering support material can be made quantitative by UV-VIS and other methods, according the nature of the specific colorant employed, to assess the presence of support material at a level on the order of parts per million (ppm) or even lower concentrations. This has important implications in the manufacture of precision parts with high tolerances.

In embodiments, there are provided systems of inkjet inks suitable for additive manufacturing by inkjet printing comprising a build ink and a support ink, wherein the build ink and support ink have a differential color scheme, and wherein at least one of the build ink or the support ink comprises a colorant.

In embodiments, the support ink comprises the at least one colorant. In embodiments, the build ink comprises a colorant different from the support ink colorant. In embodiments, a colorant is absent from the build ink. In embodiments, the at least one colorant is miscible in the support ink. In embodiments, the at least one colorant is miscible in the support ink, but not in the build ink. In embodiments, the at least one colorant is a dye or pigment.

### Colorants

Various suitable colorants of any color can be present in the toners, including suitable colored pigments, dyes, and mixtures thereof including REGAL 330®; (Cabot), Acetylene Black, Lamp Black, Aniline Black; magnetites, such as Mobay magnetites M08029®, M08060®; Columbian magnetites; MAPICO® BLACKS and surface treated magnetites; Pfizer magnetites CB4799®, CB5300®, CB5600®, MCX6369®; Bayer magnetites, BAYFERROX 8600®, 8610®; Northern Pigments magnetites, NP-604®, NP 608®; Magnox magnetites TMB-100®, or TMB-104®; and the like; cyan, magenta, yellow, red, green, brown, blue or mixtures thereof, such as specific phthalocyanine HELIOGEN BLUE L6900®, D6840®, D7080®, D7020®, PYLAM OIL BLUE@, PYLAM OIL YELLOW®, PIGMENT BLUE 1® available from Paul Uhlich & Company, Inc., PIGMENT VIOLET 1®, PIGMENT RED 48®, LEMON CHROME YELLOW DCC 1026®, E.D. TOLUIDINE RED® and BON RED C® available from Dominion Color Corporation, Ltd., Toronto, Ontario, NOVAPERM YELLOW FGL®, HOSTAPERM PINK E® from Hoechst, and CINQUASIA MAGENTA® available from E.I. DuPont de Nemours & Company, and the like. Generally, colored pigments and dyes that can be selected are cyan, magenta, or yellow pigments or dyes, and mixtures thereof. Examples of magentas that may be selected include, for example, 2,9-dimethyl-substituted quinacridone and anthraquinone dye identified in the Color Index as CI 60710, CI Dispersed Red 15, diazo dye identified in the Color Index as CI 26050, CI Solvent Red 19, and the like. Other colorants are magenta colorants of (Pigment Red) PR81:2, CI 45160:3. Illustrative examples of cyans that may be selected include copper tetra(octadecyl sulfonamido) phthalocyanine, x copper phthalocyanine pigment listed in the Color Index as CI 74160, CI Pigment Blue, and Anthrathrene Blue, identified in the Color Index as CI 69810, Special Blue X 2137, and the like; while illustrative examples of yellows that may be selected are diarylide yellow 3,3-dichlorobenzidene acetoacetanilides, a monoazo pigment identified in the Color Index as CI 12700, CI Solvent Yellow 16, a nitrophenyl amine sulfonamide identified in the Color Index as Forum Yellow SE/GLN, CI Dispersed Yellow 33 2,5 dimethoxy-4-sulfonanilide phenylazo-4'-chloro-2,5-dimethoxy acetoacetanilides, and Permanent Yellow FGL, PY17, CI 21105, and known suitable dyes, such as red, blue, green, Pigment Blue 15:3 C.I. 74160, Pigment Red 81:3 C.I. 45160:3, and Pigment Yellow 17 C.I. 21105, and the like, reference for example U.S. Patent 5,556,727, the disclosure of which is totally incorporated herein by reference.

The colorant, more specifically black, cyan, magenta and/or yellow colorant, may be incorporated in an amount sufficient to impart the desired color to the build or support inks. In general, pigment or dye is selected, for example, in an amount of from about 2 to about 60% by weight, or from about 2 to about 9% by weight for color build or support inks, and about 3 to about 60% by weight for black build or support inks.

In embodiments, the build ink is UV curable. In embodiments, the support ink is UV curable.

Numerous build materials are suitable for use with colored support materials disclosed herein. Build materials may be based on the one or more of the following aliphatic and aromatic monomers: 1. monofunctional monomers, including, but not limited to 2-phenoxyethylacrylate, alkoxylated lauryl acrylate, alkoxylated phenol acrylate, alkoxylated tetrahydrofurfuryl acrylate, caprolactone acrylate, cyclic trimethylolpropane formyl acrylate, ethylene glycol methyl ether methacrylate, ethoxylated nonyl phenol acrylate, isobornyl acrylate (SR506, available from Sartomer Chemical Corp.), isodecyl acrylate, isooctyl acrylate, lauryl acrylate, octadecyl acrylate (stearyl acrylate), tetrahydrofurfuryl acrylate (SR285, from Sartomer Chemical Co.), tridecyl acrylate, 4-acryolyl morpholine (from Aldrich Chemical Co.); 2. difunctional monomers, including, but not limited to1, 12 dodecane diol diacrylate, 1,3-butylene glycol diacrylate, 1,4-butanediol diacrylate, 1,6-hexanediol diacrylate (SR238B, from Sartomer Chemical Co.), alkoxylated hexanediol diacrylate, alkoxylated neopentyl glycol diacrylate, cyclohexane dimethanol diacrylate, diethylene glycol diacrylate (SR230, from Sartomer Chemical Co.), ethoxylated (4) bisphenol A diacrylate (SR601, from Sartomer Chemical Co.), neopentyl glycol diacrylate, polyethylene glycol (400) diacrylate (SR344, from Sartomer Chemical Co.), propoxylated (2) neopentyl glycol diacrylate (SR9003B, from Sartomer Chemical Co.), tetraethylene glycol diacrylate, tricyclodecane dimethanol diacrylate (SR833S, from Sartomer Chemical Co.), triethylene glycol diacrylate (SR272, from Sartomer Chemical Co.), tripropylene glycol diacrylate; 3. trifunctional monomers, including, but not limited to ethoxylated (9) trimethylol propane triacrylate, pentaerythritol triacrylate, propoxylated (3) glyceryl triacrylate (SR9020, from Sartomer Chemical Co.), propoxylated (3) trimethylol propane triacrylate (SR492, from Sartomer Chemical Co.), tris (2-hydroxylethyl) isocyanurate triacrylate (SR368, from Sartomer Chemical Co.); 4. multifunctional monomers, including, but not limited to ditrimethylolpropane tetraacrylate, dipentaerythritol pentaacrylate (SR399, from Sartomer Chemical Co.), ethoxylated (4) pentaerythritol tetraacrylate (SR494, from Sartomer Chemical Co.); 5. oligomers, including, but not limited to polyester acrylates, polyether acrylates, epoxy acrylates, and urethane acrylates.

Examples of polyester acrylate oligomers include, without limitation CN293, CN299, CN292, CN296, CN2279, CN2262, CN2267, CN2200, CN2203, CN2281, and CN2281 from Sartomer Chemical Co.

Examples of polyether acrylate oligomers include, without limitation Genomer 3364, Genomer 3414, Genomer 3457, Genomer 3497, all available from Rahn Corp.

Examples of epoxy acrylate oligomers include, without limitation CN104Z, CN2102E, CN110, CN120Z, CN116, CN117, CN118, CN119, and CN2003B, all available from Sartomer Chemical Co. Further examples include, without limitation Genomer 2235, Genomer 2252, Genomer 2253, Genomer 2255, Genomer 2259, Genomer 2263, Genomer 2280, and Genomer 2281, all available from Rahn Corp.

Examples of urethane acrylate oligomers include, without limitation aromatic urethane oligomers such as: CN9782, CN9783, CN992, CN975 (hexafunctional), CN972, all available from Sartomer Chemical Co. Also Genomer 4622 and Genomer 4217 (Rahn Corp.). Aliphatic urethanes include, without limitation CN9004, CN9005, CN9006, CN9006, CN9023, CN9028, CN9178, CN969, CN9788, CN986, CN989, CN9893, CN996, CN2920, CN3211, CN9001, CN9009, CN9010, CN9011, CN9071, CN9070, CN929, CN962, CN9025, CN9026, CN968, CN965, CN964, CN991, CN980, CN981, CN983, CN9029, CN9030, CN9031, CN9032, CN9039, CN9018, CN9024, CN9013 (all from Sartomer Chemical Co.). Other examples include, without limitation Genoer 4188, Cnomer 4215, Genomer 4230, Genomer 4267, Genomer 4269, Genomer 4312, Genomer 4316, Genomer 4425, Genoer 4590, and Genomer 4690 (all from Rahn Corp.).

Other examples of urethane acrylate oligomers include, without limitation the BOMAR™ series of urethane oligomers available from Dymax Corporation, including, without limitation BR-441B, BR-471, BR704P, BR-741, BR-742P, BR-7432GI30, BR-744BT, BR742M, B-952, BR-116, BR-146, and BR-202.

Further examples include, without limitation trifunctional urethane acrylate oligomers from IGM Resins such as Photomer 6008, Photomer 6010, Photomer 6019, Photomer 6019, Photomer 6184, Photomer 6630, and Photomer 6892.

Support materials include, without limitation, water-soluble polar acrylate materials such as those disclosed in U.S. Patent Nos. 6,569,373 and 8,883,392, the entire contents of which are incorporated herein by reference in their entirety. In embodiments, the support ink may be selected to be swellable. Specific examples, include, without limitation, PEG-acrylates.

In embodiments, there are provided methods of additive manufacturing comprising providing a system of inkjet inks suitable for additive manufacturing by inkjet printing, the system comprising a build ink and a support ink, wherein the build ink and support ink have a differential color scheme, and wherein at least one of the build ink or the support ink comprises a colorant, and the method further comprising printing via a multi-jet inkjet printing system an article with the build ink and the support ink, the article comprising a build material portion and a support material portion.

In embodiments, methods may further comprise washing the article to remove the support material portion to provide a final three-dimensional printed object. In embodiments, the washing step is performed with water. In embodiments, the washing step is performed with an organic solvent selected from isopropanol (IPA), methanol, or ethanol, optionally with water or slightly alkaline water (i.e. 1 % NaOH solution).

In embodiments, methods may further comprise detecting the complete removal of the support material portion colorimetrically, such as by measurement of the optical density with a spectrodensitometer, or spectrophotometer for very thin films (degree of absorbance can be detected for transparent, colored films).

In embodiments, the build ink and the support ink are UV curable.

In embodiments, the at least one colorant is miscible in the support ink.

In embodiments, the at least one colorant is a dye or pigment.

In embodiments, there are provided cartridges or kits for additive manufacturing by inkjet printing comprising a system of inkjet inks suitable for additive manufacturing by inkjet printing, the system comprising a build ink and a support ink, wherein the build ink and support ink have a differential color scheme, and wherein at least one of the build ink or the support ink comprises a colorant.

In embodiments, the cartridges or kits may further comprise instructions for its use in a multi-jet inkjet printer.

The following Examples are being submitted to illustrate embodiments of the present disclosure. These Examples are intended to be illustrative only and are not intended to limit the scope of the present disclosure. Also, parts and percentages are by weight unless otherwise indicated. As used herein, "room temperature" refers to a temperature of from about 20 ° C to about 25° C.

### EXAMPLES

### Example 1

This example describes a proof of principal experiment conducted to demonstrate the use of a washable colored support material.

12 'sandwich structures' of build/support were prepared with 3 different build ink formulations (A, B and C, in Table 1 below). A 1 cm x 6 cm silicone rubber mold was ½ filled with build formulation, then subjected to LED curing. Next, 4 different support formulations were tested (Support-1, -2, -3, -4, in Table 2 below) by pouring the colored support material on top of the build parts, followed by LED curing. The support was removed from the sandwich structures by soaking the parts in water containing 1 % NaOH, followed by mechanical scraping to remove any stubborn material that remained adhered to the build parts. A final wipe with an IPA-soaked cloth helped to remove the last of the residual support remaining.

Table 1 shows the formulation of the three build materials. VisiJet CR-WT is a white UV curable ink (available from 3D systems). VisiJet CR-CL is a clear UV curable ink (available from 3D Systems). Both inks contain a mixture of mono-, di- and multifunctional acrylates monomers as well as urethane oligomer acrylates, and photoinitiators. CL-1 is a formulation design comprising acrylate monomers as well as oligomer acrylates and photoinitiators.

**Table 1. Build Formulations**

| | |
|---|---|
| | |
| A | Visijet CR-WT |
| B | Visijet CR-CL |
| C | CL-1 |

Table 2 shows the formulations of the two curable support formulations with a dye, and two control sample support formulations containing no dye. S705 is a commercial support material (Stratsys) containing a mixture of mono-, di- and multifunctional polar acrylates, and photoinitiators. The cured S705 is designed to be water miscible and swellable so as to easily be removed from the cured build material. The exact composition of S705 is proprietary. S3 is another proprietary composition comprising acrylates and photoinitiators. Solvent Red #49 is a commercial dye available from Sigma-Aldrich as Rhodamine B.

**Table 2. Support Formulations**

| | Support-1 | | Support -2 | | Support -3 | | Support -4 | |
|---|---|---|---|---|---|---|---|---|
| Component | Wt% | Mass (g) | Wt% | Mass (g) | Wt% | Mass (g) | Wt% | Mass (g) |
| S705 | 99.7 | 9.97 | - | - | 100% | 10 | - | - |
| S3 | - | - | 99.7 | 9.97 | - | | 100% | 10 |
| Solvent Red #49 | 0.3 | 0.03 | 0.3 | 0.03 | - | - | - | - |
| Total | | 10.0 | | 10.0 | | 10.0 | | 10.0 |

12 sandwich structures were prepared combining the three build formulations with the four support formulations. After curing the support material on top of the build material the complete removal of the washable support material was performed. After a quick rub with an IPA soaked Kim wipe, the parts were nearly 100% clean, indicating complete removal of support materials. In all cases, it appeared that the removal of dyed support material from the parts was complete with no residue remaining.

Viewed from the side, the 12 sandwich structures of with the dyed support material provided an easily discernable interface between the colored support portion and the white build material.

Table 3 shows further experiments were carried out to show combinations of dye colorant/support materials that show staining of the cured build material (which is typically undesirable). In each entry about 0.25wt% dye was dissolved in washable support material (SUP705, available from Stratsys Corporation).

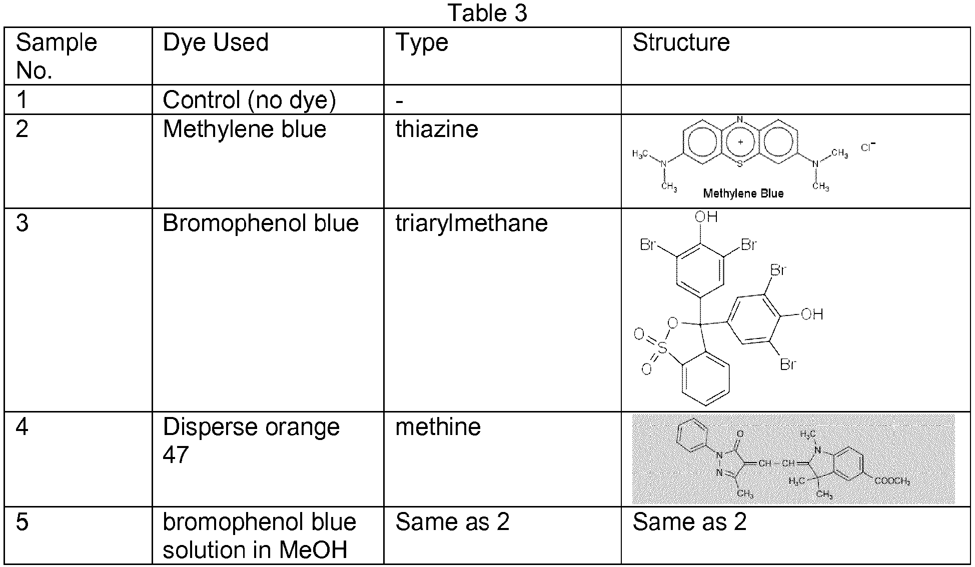

Cured sticks of build material (VisiJet CR-CL, from Stratasys Corporation) were dipped into the dyed support solutions, and stored overnight (ca. 18h). After immersion, samples were removed from the dyed solutions, wiped down, rinsed with methanol, and finally, rinsed with THF solvent to remove any surface adhered dyed support materials. Samples 2 and 4 showed persistent coloration/staining of the cured build material, indicating that these particular dye-build material combinations are not suitable.

## Claims

1. A system of inkjet inks suitable for additive manufacturing by inkjet printing comprising:
a build ink; and
a support ink;
wherein the build ink and support ink have a differential color scheme; and
wherein at least one of the build ink or the support ink comprises a colorant.

2. The system of claim 1, wherein the support ink is removable by washing with a solvent.

3. The system of claim 1, wherein the support ink comprises the at least one colorant.

4. The system of claim 3, wherein the build ink comprises a colorant different from the support ink colorant.

5. The system of claim 3, wherein a colorant is absent from the build ink.

6. A method of additive manufacturing comprising:
providing a system of inkjet inks suitable for additive manufacturing by inkjet printing, the system comprising:
a build ink; and
a support ink;
wherein the build ink and support ink have a differential color scheme; and
wherein at least one of the build ink or the support ink comprises a colorant; and
printing via a multi-jet inkjet printing system an article with the build ink and the support ink, the article comprising a build material portion and a support material portion.

7. The method of claim 6, further comprising washing the article to remove the support material portion to provide a final three-dimensional printed object.

8. The method of claim 7, wherein the washing step is performed with water.

9. The method of claim 7, wherein the washing step is performed with an organic solvent selected from isopropanol (IPA), methanol or ethanol.

10. A cartridge or kit for additive manufacturing by inkjet printing comprising a system of inkjet inks suitable for additive manufacturing by inkjet printing, the system comprising:
a build ink; and
a support ink;
wherein the build ink and support ink have a differential color scheme; and
wherein at least one of the build ink or the support ink comprises a colorant.
